# EUROPEAN PATENT SPECIFICATION

(11) **EP 4 256 967 B1**
(45) Date of publication and mention of the grant of the patent: **28.01.2026**
(21) Application number: 21900637.6
(22) Date of filing: 01.12.2021
(51) Int. Cl.: A23D 9/007, A23D 9/013, C11B 5/00, A23D 9/02, C11C 1/00, C11C 1/04, C11C 3/02

(54) **FAT AND OIL COMPOSITION**
FETT- UND ÖLZUSAMMENSETZUNG
COMPOSITION DE MATIÈRE GRASSE ET D'HUILE

(30) Priority: 02.12.2020 JP 2020200447
(43) Date of publication of application: 11.10.2023
(73) Proprietor: Kao Corporation, Chuo-ku, Tokyo 103-8210 (JP)
(72) Inventor: SAITO, Katsuyoshi, Tokyo 131-8501 (JP); OUCHI, Mizue, Tokyo 131-8501 (JP)
(74) Representative: Hoffmann Eitle
(86) International application number: PCT/JP2021/044103
(87) International publication number: WO 2022/118886

(56) References cited:
- EP-A1- 1 430 783
- EP-B1- 1 424 907
- EP-B1- 1 476 022
- WO-A2-02/11552
- JP-A- 2002 138 296
- JP-A- 2002 138 297
- JP-A- 2003 160 794
- JP-A- 2003 306 692

## Description

### Field of the Invention

The present invention relates to a fat or oil composition.

### Background of the Invention

It is known that α-linolenic acid (C18:3, ALA), which is rich in linseed and the like, is, when taken up into the body, converted into eicosapentaenoic acid (C20:5) or docosahexaenoic acid (C22:6), both of which have high physiological activity. In recent years, it has been desired that a fat or oil highly containing α-linolenic acid be utilized.

Meanwhile, it has been reported that a fat or oil containing diacylglycerols at a high concentration has physiological actions, such as suppression of a postprandial increase in blood triglycerides (neutral fats) and a small accumulation amount in the body.

In view of the foregoing, in order to effectively exert physiologically active functions of α-linolenic acid and diacylglycerols, there have been conventionally proposed, for example, a fat or oil composition containing 15 wt% to 17 wt% of diglycerides in which less than 15 wt% of constituent fatty acids are ω3 unsaturated fatty acids, and 30 wt% to 85 wt% of triglycerides in which 15 wt% or more of constituent fatty acids are ω3 unsaturated fatty acids (Patent Document 1), and a fat or oil composition containing 5 wt% to 59.9 wt% of diglycerides in which 15 wt% to 90 wt% of constituent fatty acids are ω3 unsaturated fatty acids having less than 20 carbon atoms, triglycerides, and monoglycerides (Patent Document 2).

However, the fat or oil rich in α-linolenic acid has extremely low oxidative stability and easily generates unpleasant odor. In view of the foregoing, in general, an antioxidant is incorporated into the fat or oil to prevent deterioration of taste and flavor in the fat or oil.

For example, tocopherol, a rosemary extract, an ascorbic acid fatty acid ester, or lecithin is used as the antioxidant for the fat or oil. For example, in Patent Document 1 described above, there is a disclosure of mixing 0.025 part of vitamin C palmitate with respect to 100 parts of a mixture containing a diglyceride fat or oil and linseed oil, and in Patent Document 2, there is a disclosure of mixing 0.02 part of vitamin C palmitate with respect to 100 parts of a diglyceride oil.

EP 1 430 783 A1 relates to an oil/fat composition comprising 10.1 to 94.9 wt.% of a triglyceride, 0.1 to 30 wt.% of a monoglyceride and 5 to 59.9 wt.% of a diglyceride which has, as a fatty acid constituent thereof, 15 to 90 wt.% of an ω3-unsaturated fatty acid having less than 20 carbon atoms.

EP 1 424 907 B1 relates to an oil composition comprising the following components (A) and (B): (A) 15 to 70% by weight of diglycerides in which less than 15% by weight of the constitutive fatty acids are ω3 type unsaturated fatty acids; and (B) 30 to 85% by weight of a triglyceride in which at least 15% by weight of the constitutive fatty acids are ω3 type unsaturated fatty acids.

EP 1 476 022 B1 relates to an oil/fat powder comprising the following Components (A), (B) and (C): (A) 15 to 79.9 wt.% of a glyceride mixture containing 5 to 84.9 wt.% of triglycerides, 0.1 to 5 wt.% of monoglycerides and 15 to 94.9 wt.% of diglycerides, and having, as at least 50 wt.% of all the constitutive fatty acids, unsaturated fatty acids; (B) 20 to 84.9 wt.% of one or at least two powder forming bases selected from carbohydrates, proteins and peptides; (C) 0.1 to 5 wt.% of water.

WO 02/11552 A2 relates to an oil/fat composition comprising 60 to 100 wt.% of a diglyceride wherein the diglyceride has, as the fatty acid constituent thereof, 15 to 90 wt.% of an ω3-unsaturated fatty acid having less than 20 carbon atoms and a cis ω3-unsaturated fatty acid/(ω6-unsaturated fatty acid + saturated fatty acid + trans unsaturated fatty acid) at a weight ratio of 1 to 6.
(Patent Document 1) JP-A-2003-160794
(Patent Document 2) JP-A-2002-138297

### Summary of the Invention

The present invention provides a fat or oil composition, which satisfies the following (A) to (E):
(A) a content of diacylglycerols in a fat or oil is 15 mass% or more;
(B) a content of α-linolenic acid in constituent fatty acids of the fat or oil is 20 mass% or more;
(C) a content of a vitamin C fatty acid ester is from 0.025 mass% to 0.30 mass%;
(D) a mass ratio of the content of diacylglycerols in the fat or oil to the content of vitamin C fatty acid ester in the fat or oil composition, [(DAG)/(VC)], is 150 or more; and
(E) a mass ratio of the content of α-linolenic acid in the constituent fatty acids of the fat or oil to the content of vitamin C fatty acid ester in the fat or oil composition, [(ALA)/(VC)], is from 300 to 700.

### Detailed Description of the Invention

However, even if the conventional methods are used, in particular, stability with respect to light is low, and taste and flavor are not sufficiently kept.

Accordingly, the present invention relates to provide a fat or oil having satisfactory taste and flavor even after exposure to light, which has diacylglycerol at a high content and is rich in α-linolenic acid.

The present inventors according to the present application made extensive investigations with attention focused on hexanal and propionic acid as odor components generated by light oxidation of α-linolenic acid. As a result, the inventors? found that by incorporating a vitamin C fatty acid ester into a fat or oil within a specific range, it results in preferentially generating hexanal among the two odor components to suppress pungent odor and rancid odor resulting from propionic acid, and hence taste and flavor suitable for an edible oil are kept.

Further, the inventors? found that, while the vitamin C fatty acid ester has low solubility in the fat or oil and is easily precipitated under low temperature, the precipitation of the vitamin C fatty acid ester at low temperature is suppressed by incorporating diacylglycerols into the fat or oil at a specific quantitative ratio or higher with respect to the vitamin C fatty acid ester.

According to the present invention, there can be provided a fat or oil composition, which is excellent in physiological effects due to its high contents of α-linolenic acid and diacylglycerols, and at the same time, keeps satisfactory taste and flavor with little pungent odor and rancid odor even after exposure to light. Moreover, in the fat or oil composition of the present invention, the precipitation of the vitamin C fatty acid ester is suppressed even under low temperature.

A fat or oil composition of the present invention satisfies the following (A) to (E):
(A) the content of diacylglycerols in a fat or oil is 15 mass% or more;
(B) the content of α-linolenic acid in the constituent fatty acids of the fat or oil is 20 mass% or more;
(C) the content of a vitamin C fatty acid ester is from 0.025 mass% to 0.30 mass%;
(D) the mass ratio of the content of diacylglycerols in the fat or oil to the content of vitamin C fatty acid ester in the fat or oil composition, [(DAG)/(VC)], is 150 or more; and
(E) the mass ratio of the content of α-linolenic acid in the constituent fatty acids of the fat or oil to the content of vitamin C fatty acid ester in the fat or oil composition, [(ALA)/(VC)], is from 300 to 700.

In the present invention, the content of fat or oil in the fat or oil composition is preferably 90 mass% (hereinafter simply "%") or more, more preferably 95% or more, from the standpoint of usability, and is preferably 99.975% or less, more preferably 99.950% or less.

The content of fat or oil in the fat or oil composition is preferably from 90% to 99.975%, more preferably from 95% to 99.950%.

In the present invention, the fat or oil contains any one or more kinds of monoacylglycerols, diacylglycerols, and triacylglycerols. The kind of the fat or oil is not particularly limited, and may be any fat or oil that can be used as an edible fat or oil.

In the present invention, the content of diacylglycerols in the fat or oil is 15% or more. The content of diacylglycerols in the fat or oil is 15% or more, preferably 20% or more, more preferably 25% or more, more preferably 30% or more, more preferably 50% or more, more preferably 60% or more, more preferably 70% or more, even more preferably 80% or more, from the standpoint of the effective exertion of effects, the standpoint of physiological effects, and the standpoint of the solubility of the vitamin C fatty acid ester, and is preferably 99.5% or less, more preferably 98% or less, more preferably 95% or less, even more preferably 90% or less, from the standpoint of industrial productivity.

The content of diacylglycerols in the fat or oil is 15% or more, preferably from 20% to 99.5%, more preferably from 25% to 98%, more preferably from 30% to 95%, more preferably from 60% to 90%, more preferably from 70% to 90%, even more preferably from 80% to 90%.

The constituent fatty acids of the diacylglycerols are not particularly limited, and may be any of saturated fatty acids or unsaturated fatty acids to be described later. In the present invention, the content of α-linolenic acid in the constituent fatty acids of the diacylglycerols is preferably 20% or more, from the standpoint of the effective exertion of effects and the standpoint of physiological effects.

The content of α-linolenic acid in the constituent fatty acids of the diacylglycerols is preferably 30% or more, more preferably 40% or more, even more preferably 50% or more, and is preferably 80% or less, more preferably 70% or less, even more preferably 60% or less, from the standpoint of oxidative stability.

The amount of a fatty acid as used herein refers to an amount obtained by converting the fatty acid to a free fatty acid.

The fat or oil of the present invention preferably comprises triacylglycerols, and the content thereof is preferably 1% or more, more preferably 2% or more, more preferably 5% or more, even more preferably 10% or more, and is preferably 85% or less, more preferably 80% or less, more preferably 75% or less, more preferably 50% or less, even more preferably 25% or less, from the standpoint of the industrial productivity of the fat or oil.

The content of triacylglycerols in the fat or oil is preferably from 1% to 85%, more preferably from 2% to 80%, more preferably from 2% to 75%, more preferably from 5% to 50%, even more preferably from 10% to 25%.

The content of monoacylglycerols in the fat or oil is preferably 5% or less, more preferably 3% or less, more preferably 2% or less, even more preferably 1.5% or less, and is preferably more than 0%, from the standpoints of taste and flavor, the industrial productivity of the fat or oil, and oxidative stability. The content of monoacylglycerols in the fat or oil may be 0%.

The content of a free fatty acid or a salt thereof in the fat or oil is preferably 3% or less, more preferably 2% or less, even more preferably 1% or less, and is preferably more than 0%, from the standpoints of taste and flavor and oxidative stability. The content of free fatty acid or the salt thereof in the fat or oil may be 0%.

The fatty acid compositions of the triacylglycerols, the diacylglycerols, and the monoacylglycerols may be identical to or different from each other.

In the present invention, the content of α-linolenic acid in the constituent fatty acids of the fat or oil is 20% or more. The content of α-linolenic acid in the constituent fatty acids of the fat or oil is preferably 20% or more, more preferably 25% or more, more preferably 30% or more, more preferably 40% or more, more preferably 45% or more, more preferably 50% or more, even more preferably 52% or more, from the standpoint of physiological effects, and is preferably 80% or less, more preferably 70% or less, more preferably 65% or less, even more preferably 60% or less, from the standpoint of oxidative stability.

The content of α-linolenic acid in the constituent fatty acids of the fat or oil is 20% or more, preferably from 20% to 80%, more preferably from 25% to 70%, more preferably from 30% to 70%, more preferably from 40% to 70%, more preferably from 45% to 70%, more preferably from 50% to 65%, even more preferably from 52% to 60%.

In the present invention, the constituent fatty acids of the fat or oil other than α-linolenic acid are not particularly limited, and may be any of saturated fatty acids and unsaturated fatty acids.

From the standpoints of the taste and flavor and industrial productivity of the fat or oil, the content of unsaturated fatty acids in the constituent fatty acids of the fat or oil is preferably from 60% to 100%, more preferably from 70% to 100%, even more preferably from 80% to 99.5%. The carbon numbers of the unsaturated fatty acids are preferably from 14 to 24, more preferably from 16 to 22, from the standpoint of physiological effects.

In particular, the content of linoleic acid (C18:2) in the constituent fatty acids of the fat or oil is preferably 5% or more, more preferably 10% or more, and is preferably 40% or less, more preferably 30% or less, even more preferably 20% or less, from the standpoint of industrial productivity.

The content of linoleic acid in the constituent fatty acids of the fat or oil is preferably from 5% to 40%, more preferably from 5% to 30%, even more preferably from 10% to 20%.

In addition, the content of oleic acid (C18:1) in the constituent fatty acids of the fat or oil is preferably 10% or more, and is preferably 65% or less, more preferably 50% or less, even more preferably 30% or less, from the standpoint of industrial productivity.

The content of oleic acid in the constituent fatty acids of the fat or oil is preferably from 10% to 65%, more preferably from 10% to 50%, even more preferably from 10% to 30%.

In addition, the total content of the saturated fatty acids in the constituent fatty acids of the fat or oil is preferably 30% or less, more preferably 20% or less, more preferably 10% or less, even more preferably 7% or less, and is preferably 0.5% or more, from the standpoints of appearance, physiological effects, and the industrial productivity of the fat or oil.

The carbon numbers of the saturated fatty acids are preferably from 14 to 24, more preferably from 16 to 22.

The fat or oil composition of the present invention comprises a vitamin C fatty acid ester. The vitamin C fatty acid ester used in the present invention is an ester of L-ascorbic acid and a higher fatty acid, and a commercially available product, preferably a commercially available product for a food and drink may be used. The higher fatty acid is preferably a linear saturated fatty acid having 12 to 22 carbon atoms. The vitamin C fatty acid esters may be used alone or in combination thereof.

The vitamin C fatty acid ester is preferably vitamin C palmitate, vitamin C stearate, or combinations thereof, more preferably vitamin C palmitate, from the standpoint of suppressing pungent odor and rancid odor even after exposure to light to improve taste and flavor.

In the present invention, the content of vitamin C fatty acid ester in the fat or oil composition is from 0.025 to 0.30%. The content of vitamin C fatty acid ester in the fat or oil composition is 0.025% or more, preferably 0.027% or more, more preferably 0.030% or more, more preferably 0.040% or more, even more preferably 0.050% or more, from the standpoint of the effective exertion of effects, and is 0.30% or less, preferably 0.25% or less, more preferably 0.20% or less, more preferably 0.15% or less, even more preferably 0.10% or less, from the standpoints of appearance, taste and flavor, and the effective exertion of effects.

The content of vitamin C fatty acid ester in the fat or oil composition is from 0.025% to 0.30%, preferably from 0.027% to 0.25%, more preferably from 0.030% to 0.20%, more preferably from 0.040% to 0.15%, even more preferably from 0.050% to 0.10%.

In the present invention, the mass ratio of the content of diacylglycerols in the fat or oil to the content of vitamin C fatty acid ester in the fat or oil composition, [(DAG)/(VC)], is 150 or more. While the vitamin C fatty acid ester has low solubility in the fat or oil and is easily precipitated under low temperature, the solubility of the vitamin C fatty acid ester in the fat or oil can be improved by incorporating the diacylglycerols into the fat or oil at a specific quantitative ratio or higher to the vitamin C fatty acid ester, to thereby suppress the precipitation at low temperature. Accordingly, in the present invention, the taste and flavor of the fat or oil composition suitable for an edible oil can be kept, and the low temperature stability thereof can be achieved.

The mass ratio of the content of diacylglycerols in the fat or oil to the content of vitamin C fatty acid ester in the fat or oil composition, [(DAG)/(VC)], is 150 or more, preferably 180 or more, more preferably 200 or more, even more preferably 240 or more, from the standpoints of appearance, the solubility of the vitamin C fatty acid ester, and the effective exertion of effects, and is preferably 4,000 or less, more preferably 3,800 or less, more preferably 3,500 or less, more preferably 3,000 or less, even more preferably 2,000 or less, from the standpoint of taste and flavor.

The mass ratio of the content of diacylglycerols in the fat or oil to the content of vitamin C fatty acid ester in the fat or oil composition, [(DAG)/(VC)], is 150 or more, preferably from 150 to 4,000, more preferably from 150 to 3,800, more preferably from 180 to 3,500, more preferably from 200 to 3,000, even more preferably from 240 to 2,000.

In addition, in the present invention, the mass ratio of the content of α-linolenic acid in the constituent fatty acids of the fat or oil to the content of vitamin C fatty acid ester in the fat or oil composition, [(ALA)/(VC)], is from 300 to 700. The mass ratio of the content of α-linolenic acid in the constituent fatty acids of the fat or oil to the content of vitamin C fatty acid ester in the fat or oil composition, [(ALA)/(VC)], is 300 or more, preferably 500 or more, from the standpoints of taste and flavor and the effective exertion of effects, and is 700 or less, preferably 600 or less, from the standpoints of taste and flavor and the effective exertion of effects.

The mass ratio of the content of α-linolenic acid in the constituent fatty acids of the fat or oil to the content of vitamin C fatty acid ester in the fat or oil composition, [(ALA)/(VC)], is from 300 to 700, preferably from 300 to 600.

α-Linolenic acid is subjected to light oxidation to generate hexanal and propionic acid serving as odor components. Hexanal is characterized by grassy odor. In addition, propionic acid is a causal component of pungent odor and rancid odor of the fat or oil.

In the fat or oil composition of the present invention, the above-mentioned (A) to (E) are satisfied, and thus hexanal is preferentially generated among hexanal and propionic acid generated by the light oxidation of α-linolenic acid, as shown in Examples to be described later. Accordingly, in sensory evaluation of the fat or oil composition, grassy odor of hexanal is strongly exhibited even after exposure to light, and pungent odor and rancid odor resulting from propionic acid are hardly sensed, and hence the taste and flavor of the composition suitable for an edible oil are kept. In the fat or oil composition after a light exposure storage evaluation described in Examples to be described later, the ratio of a peak area of hexanal to a peak area of propionic acid in headspace solid phase microextraction/gas chromatography/mass spectrometry (HS SPME/GC/MS) described in Examples is preferably 1.0 or more, more preferably 1.5 or more, more preferably 1.6 or more, even more preferably 2.0 or more, from the standpoint of reducing pungent odor and rancid odor.

The fat or oil composition of the present invention may be prepared from a diacylglycerol-containing fat or oil containing α-linolenic acid in its constituent fatty acids. For example, the fat or oil composition may be obtained by adding the vitamin C fatty acid ester, and further, as required, other components to the diacylglycerol-containing fat or oil containing α-linolenic acid in its constituent fatty acids, followed by heating, stirring, or the like as appropriate. As required, a general edible fat or oil may be blended.

The diacylglycerol-containing fat or oil containing α-linolenic acid in its constituent fatty acids may be obtained, for example, by: an esterification reaction between fatty acids derived from a fat or oil, and glycerin; or a transesterification reaction (glycerolysis) between a fat or oil, and glycerin.

The esterification reaction and the glycerolysis reaction are broadly classified into: a chemical method involving using a chemical catalyst, such as an alkali metal or an alloy thereof, an oxide or hydroxide of an alkali metal or an alkaline earth metal, or an alkoxide of an alkali metal or an alkaline earth metal; and an enzymatic method involving using an enzyme such as a lipase.

Of those, an esterification reaction between fractionated fatty acids derived from a fat or oil, which are described later, and glycerin is preferred from the standpoint of controlling fatty acid composition.

In the present invention, the fat or oil (edible fat or oil) may be any of a plant-derived fat or oil and an animal-derived fat or oil. Examples thereof may include fats or oils including: plant-derived fats or oils, such as soybean oil, rapeseed oil, safflower oil, rice oil, corn oil, sunflower oil, cotton seed oil, olive oil, sesame oil, peanut oil, Job's tears seed oil, wheat germ oil, Japanese basil oil, linseed oil, perilla oil, chia seed oil, sacha inchi oil, walnut oil, kiwi seed oil, salvia seed oil, grape seed oil, macadamia nut oil, hazelnut oil, pumpkin seed oil, camellia oil, tea seed oil, borage oil, palm oil, palm olein, palm stearin, coconut oil, palm kernel oil, cacao butter, sal butter, shea butter, and algae oil; animal-derived fats or oils, such as fish oil, lard, beef tallow, and butter fat; and transesterified oils, hydrogenated oils, and fractionated oils thereof.

Of those, from the standpoint of usability, a plant-derived fat or oil is preferably used, a liquid fat or oil excellent in low-temperature resistance is more preferably used, and at least one kind of fat or oil selected from Japanese basil oil, linseed oil, perilla oil, chia seed oil, and sacha inchi oil rich in α-linolenic acid is even more preferably used. The liquid fat or oil means a fat or oil that is in a liquid state at 20°C, when determined in accordance with a cold test described in Standard Methods for Analysis of Fats, Oils and Related Materials 2.3.8-27.

The fatty acids derived from a fat or oil may be obtained by hydrolyzing a fat or oil. As a method of hydrolyzing the fat or oil, there are given a high-temperature and high-pressure degradation method and an enzymatic degradation method. The high-temperature and high-pressure degradation method is a method involving adding water to a fat or oil, and subjecting the mixture to a reaction under high-temperature and high-pressure conditions, to thereby provide fatty acids and glycerin. In addition, the enzymatic degradation method is a method involving adding water to a fat or oil, and subjecting the mixture to a reaction under a low-temperature condition using a fat or oil hydrolytic enzyme as a catalyst, to thereby provide fatty acids and glycerin.

The hydrolysis reaction may be performed in accordance with a conventional method.

After the hydrolysis of the fat or oil, it is preferred that a hydrolysate be fractionated and a solid be removed. As a fractionation method, there are given a solvent fractionation method, a spontaneous fractionation method (dry fractionation method), and a wetting agent fractionation method.

As means for removing a precipitated solid, there are given, for example, settled separation, filtration, centrifugation, and a method involving mixing fatty acids with an aqueous solution of a wetting agent, followed by separation.

The esterification reaction between the fatty acids derived from a fat or oil, and glycerin is preferably performed by an enzymatic method under mild conditions, from the standpoint of, for example, excellent taste and flavor.

The usage amount of the enzyme may be appropriately decided in consideration of the activity of the enzyme. From the standpoint of enhancing a reaction rate, when an immobilized enzyme is used, the usage amount is preferably from 1% to 30%, more preferably from 2% to 20%, with respect to the total mass of raw materials for the esterification reaction.

The reaction temperature of the esterification reaction is preferably from 0°C to 100°C, more preferably from 20°C to 80°C, even more preferably from 30°C to 60°C, from the standpoint of enhancing a reaction rate and the standpoint of suppressing the inactivation of the enzyme. In addition, a reaction time is preferably 15 hours or less, more preferably from 1 hour to 12 hours, even more preferably from 2 hours to 10 hours, from the standpoint of industrial productivity.

As means for bringing the fatty acids and glycerin into contact with each other, there are given, for example, immersion, stirring, and a method involving passing a liquid through a column packed with an immobilized lipase through use of a pump or the like.

After the esterification reaction, a refinement process to be generally used for a fat or oil may be performed. Specific examples thereof may include processes, such as distillation treatment, acid treatment, water washing, decoloration, and deodorization.

The fat or oil composition of the present invention may be used in the same manner as a general edible fat or oil, and may be applied to various foods and drinks and feeds each using a fat or oil. Examples of the food and drink include foods for specified health use and foods with function claims claiming to have the physiological effects of α-linolenic acid and diacylglycerols as well as general foods and drinks.

The form of the food and drink may be a solid, a semisolid, or a liquid, and examples thereof include a drink, a water-in-oil type fat or oil-containing food, an oil-in-water type fat or oil-containing food, a bakery food, confectionery, a frozen food, a retort food, and a composition for nutritional supplementation, such as a tablet, a capsule, or a troche.

Examples of the feed include: a livestock feed to be used for cattle, swine, or the like; a small-animal feed to be used for rabbits, mice, or the like; a fish and shellfish feed to be used for eels, prawns, or the like; and a pet food to be used for dogs, cats, or the like.

The fat or oil composition of the present invention is preferably a fat or oil composition, which satisfies the following (A) to (E), from the standpoint of suppressing pungent odor and rancid odor even after exposure to light to improve taste and flavor and the standpoint of physiological effects:
(A) the content of diacylglycerols in the fat or oil is 20 mass% or more;
(B) the content of α-linolenic acid in the constituent fatty acids of the fat or oil is from 20 mass% to 80 mass%;
(C) the content of vitamin C fatty acid ester is from 0.027 mass% to 0.30 mass%;
(D) the mass ratio of the content of diacylglycerols in the fat or oil to the content of vitamin C fatty acid ester in the fat or oil composition, [(DAG)/(VC)], is 200 or more; and
(E) the mass ratio of the content of α-linolenic acid in the constituent fatty acids of the fat or oil to the content of vitamin C fatty acid ester in the fat or oil composition, [(ALA)/(VC)], is from 300 to 700.

The fat or oil composition of the present invention is preferably a fat or oil composition, which satisfies the following (A) to (E), from the standpoint of suppressing pungent odor and rancid odor even after exposure to light to improve taste and flavor and the standpoint of physiological effects:
(A) the content of diacylglycerols in the fat or oil is from 20 mass% to 98 mass%;
(B) the content of α-linolenic acid in the constituent fatty acids of the fat or oil is from 20 mass% to 70 mass%;
(C) the content of vitamin C fatty acid ester is from 0.027 mass% to 0.25 mass%;
(D) the mass ratio of the content of diacylglycerols in the fat or oil to the content of vitamin C fatty acid ester in the fat or oil composition, [(DAG)/(VC)], is 200 or more; and
(E) the mass ratio of the content of α-linolenic acid in the constituent fatty acids of the fat or oil to the content of vitamin C fatty acid ester in the fat or oil composition, [(ALA)/(VC)], is from 300 to 700.

The fat or oil composition of the present invention is preferably a fat or oil composition, which satisfies the following (A) to (E), from the standpoint of suppressing pungent odor and rancid odor even after exposure to light to improve taste and flavor and the standpoint of physiological effects:
(A) the content of diacylglycerols in the fat or oil is from 20 mass% or 95 mass%;
(B) the content of α-linolenic acid in the constituent fatty acids of the fat or oil is from 25 mass% to 70 mass%;
(C) the content of vitamin C fatty acid ester is from 0.040 mass% to 0.15 mass%;
(D) the mass ratio of the content of diacylglycerols in the fat or oil to the content of vitamin C fatty acid ester in the fat or oil composition, [(DAG)/(VC)], is 200 or more; and
(E) the mass ratio of the content of α-linolenic acid in the constituent fatty acids of the fat or oil to the content of vitamin C fatty acid ester in the fat or oil composition, [(ALA)/(VC)], is from 300 to 700.

The fat or oil composition of the present invention is preferably a fat or oil composition, which satisfies the following (A) to (E), from the standpoint of suppressing pungent odor and rancid odor even after exposure to light to improve taste and flavor and the standpoint of physiological effects:
(A) the content of diacylglycerols in the fat or oil is from 20 mass% or 95 mass%;
(B) the content of α-linolenic acid in the constituent fatty acids of the fat or oil is from 25 mass% to 70 mass%;
(C) the content of vitamin C fatty acid ester is from 0.050 mass% to 0.10 mass%;
(D) the mass ratio of the content of diacylglycerols in the fat or oil to the content of vitamin C fatty acid ester in the fat or oil composition, [(DAG)/(VC)], is 240 or more; and
(E) the mass ratio of the content of α-linolenic acid in the constituent fatty acids of the fat or oil to the content of vitamin C fatty acid ester in the fat or oil composition, [(ALA)/(VC)], is from 300 to 600.

The fat or oil composition of the present invention is preferably a fat or oil composition, which satisfies the following (A) to (E), from the standpoint of suppressing pungent odor and rancid odor even after exposure to light to improve taste and flavor and the standpoint of physiological effects:
(A) the content of diacylglycerols in the fat or oil is from 30 mass% or 90 mass%;
(B) the content of α-linolenic acid in the constituent fatty acids of the fat or oil is from 30 mass% to 70 mass%;
(C) the content of vitamin C fatty acid ester is from 0.050 mass% to 0.10 mass%;
(D) the mass ratio of the content of diacylglycerols in the fat or oil to the content of vitamin C fatty acid ester in the fat or oil composition, [(DAG)/(VC)], is 240 or more; and
(E) the mass ratio of the content of α-linolenic acid in the constituent fatty acids of the fat or oil to the content of vitamin C fatty acid ester in the fat or oil composition, [(ALA)/(VC)], is from 300 to 600.

In relation to the above-mentioned embodiments, the following preferred examples of the claimed fat or oil compositions are described.
<1> A fat or oil composition, which satisfies the following (A) to (E):
   (A) the content of diacylglycerols in the fat or oil is 15 mass% or more;
   (B) the content of α-linolenic acid in the constituent fatty acids of the fat or oil is 20 mass% or more;
   (C) the content of vitamin C fatty acid ester is from 0.025 mass% to 0.30 mass%;
   (D) the mass ratio of the content of diacylglycerols in the fat or oil to the content of vitamin C fatty acid ester in the fat or oil composition, [(DAG)/(VC)], is 150 or more; and
   (E) the mass ratio of the content of α-linolenic acid in the constituent fatty acids of the fat or oil to the content of vitamin C fatty acid ester in the fat or oil composition, [(ALA)/(VC)], is from 300 to 700.
<2> The fat or oil composition according to Item <1>, wherein the content of fat or oil in the fat or oil composition is preferably 90 mass% or more, more preferably 95 mass% or more, is preferably 99.975 mass% or less, more preferably 99.950 mass% or less, and is preferably from 90 mass% to 99.975 mass%, more preferably from 95 mass% to 99.950 mass%.
<3> The fat or oil composition according to Item <1> or <2>, wherein the content of diacylglycerols in the fat or oil is 20 mass% or more, preferably 25 mass% or more, more preferably 30 mass% or more, more preferably 50 mass% or more, more preferably 60 mass% or more, more preferably 70 mass% or more, even more preferably 80 mass% or more, is preferably 99.5 mass% or less, more preferably 98 mass% or less, more preferably 95 mass% or less, even more preferably 90 mass% or less, and is preferably from 20 mass% to 99.5 mass%, more preferably from 25 mass% to 98 mass%, more preferably from 30 mass% to 95 mass%, more preferably from 60 mass% to 90 mass%, more preferably from 70 mass% to 90 mass%, even more preferably from 80 mass% to 90 mass%.
<4> The fat or oil composition according to any one of Items <1> to <3>, wherein the content of α-linolenic acid in the constituent fatty acids of the diacylglycerols is preferably 20 mass% or more, more preferably 25 mass% or more, more preferably 30 mass% or more, more preferably 40 mass% or more, even more preferably 50 mass% or more, is preferably 80 mass% or less, more preferably 70 mass% or less, even more preferably 60 mass% or less, and is preferably from 20 mass% to 80 mass%, more preferably from 25 mass% to 70 mass%, more preferably from 30 mass% to 70 mass%, more preferably from 40 mass% to 60 mass%, even more preferably from 50 mass% to 60 mass%.
<5> The fat or oil composition according to any one of Items <1> to <4>, wherein the content of triacylglycerols in the fat or oil is preferably 1 mass% or more, more preferably 2 mass% or more, more preferably 5 mass% or more, even more preferably 10 mass% or more, is preferably 85 mass% or less, more preferably 80 mass% or less, more preferably 75 mass% or less, more preferably 50 mass% or less, even more preferably 25 mass% or less, and is preferably from 1 mass% to 85 mass%, more preferably from 2 mass% to 80 mass%, more preferably from 2 mass% to 75 mass%, more preferably from 5 mass% to 50 mass%, even more preferably from 10 mass% to 25 mass%.
<6> The fat or oil composition according to any one of Items <1> to <5>, wherein the content of monoacylglycerols in the fat or oil is preferably 5 mass% or less, more preferably 3 mass% or less, more preferably 2 mass% or less, even more preferably 1.5 mass% or less, and is preferably more than 0 mass%.
<7> The fat or oil composition according to any one of Items <1> to <6>, wherein the content of a free fatty acid or a salt thereof in the fat or oil is preferably 3 mass% or less, more preferably 2 mass% or less, even more preferably 1 mass% or less, and is preferably more than 0 mass%.
<8> The fat or oil composition according to any one of Items <1> to <7>, wherein the content of α-linolenic acid in the constituent fatty acids of the fat or oil is 25 mass% or more, preferably 30 mass% or more, more preferably 40 mass% or more, more preferably 45 mass% or more, more preferably 50 mass% or more, even more preferably 52 mass% or more, is preferably 80 mass% or less, more preferably 70 mass% or less, more preferably 65 mass% or less, even more preferably 60 mass% or less, and is preferably from 20 mass% to 80 mass%, more preferably from 25 mass% to 70 mass%, more preferably from 30 mass% to 70 mass%, more preferably from 40 mass% to 70 mass%, more preferably from 45 mass% to 70 mass%, more preferably from 50 mass% to 65 mass%, even more preferably from 52 mass% to 60 mass%.
<9> The fat or oil composition according to any one of Items <1> to <8>, wherein the content of linoleic acid in the constituent fatty acids of the fat or oil is preferably 5 mass% or more, more preferably 10 mass% or more, is preferably 40 mass% or less, more preferably 30 mass% or less, even more preferably 20 mass% or less, and is preferably from 5 mass% to 40 mass%, more preferably from 5 mass% to 30 mass%, even more preferably from 10 mass% to 20 mass%.
<10> The fat or oil composition according to any one of Items <1> to <9>, wherein the content of oleic acid in the constituent fatty acids of the fat or oil is preferably 10 mass% or more, is preferably 65 mass% or less, more preferably 50 mass% or less, even more preferably 30 mass% or less, and is preferably from 10 mass% to 65 mass%, more preferably from 10 mass% to 50 mass%, even more preferably from 10 mass% to 30 mass%.
<11> The fat or oil composition according to any one of Items <1> to <10>, wherein the vitamin C fatty acid ester is preferably vitamin C palmitate, vitamin C stearate, or combinations thereof, more preferably vitamin C palmitate.
<12> The fat or oil composition according to any one of Items <1> to <11>, wherein the content of vitamin C fatty acid ester in the fat or oil composition is 0.027 mass% or more, preferably 0.030 mass% or more, more preferably 0.040 mass% or more, even more preferably 0.050 mass% or more, is 0.25 mass% or less, preferably 0.20 mass% or less, more preferably 0.15 mass% or less, even more preferably 0.10 mass% or less, and is preferably from 0.027 mass% to 0.25 mass%, more preferably from 0.030 mass% to 0.20 mass%, more preferably from 0.040 mass% to 0.15 mass%, even more preferably from 0.050 mass% to 0.10 mass%.
<13> The fat or oil composition according to any one of Items <1> to <12>, wherein the mass ratio [(DAG)/(VC)] of the content of diacylglycerols in the fat or oil to the content of vitamin C fatty acid ester in the fat or oil composition is 180 or more, preferably 200 or more, even more preferably 240 or more, is preferably 4,000 or less, more preferably 3,800 or less, more preferably 3,500 or less, more preferably 3,000 or less, even more preferably 2,000 or less, and is preferably from 150 to 4,000, more preferably from 150 to 3,800, more preferably from 180 to 3,500, more preferably from 200 to 3,000, even more preferably from 240 to 2,000.
<14> The fat or oil composition according to any one of Items <1> to <13>, wherein the mass ratio of the content of α-linolenic acid in the constituent fatty acids of the fat or oil to the content of vitamin C fatty acid ester in the fat or oil composition, [(ALA)/(VC)], is 500 or more, is 600 or less, and is f from 300 to 600.
<15> The fat or oil composition according to any one of Items <1> to <14>, wherein the fat or oil composition after exposure to light having an illuminance of about 2,000 lx for 7 days has a ratio of a peak area of hexanal to a peak area of propionic acid of preferably 1.0 or more, more preferably 1.5 or more, more preferably 1.6 or more, even more preferably 2.0 or more, which is analyzed by a headspace solid phase microextraction/gas chromatography/mass spectrometry method.
<16> The fat or oil composition according to any one of Items <1> to <15>, wherein the fat or oil composition preferably comprises an oil obtained by an esterification reaction between fractionated fatty acids derived from a fat or oil, and glycerin.
<17> The fat or oil composition according to Item <16>, wherein the fractionated fatty acids are preferably derived from at least one kind of fat or oil selected from Japanese basil oil, linseed oil, perilla oil, chia seed oil, and sacha inchi oil.

### Examples

### [Analysis Method]

### (i) Composition of Glycerides in Fat or oil

About 10 mg of a fat or oil sample and 0.5 mL of a trimethylsilylating agent ("Silylating agent TH," manufactured by Kanto Chemical Co., Inc.) were placed in a glass sample bottle, and the bottle was sealed and heated at 70°C for 15 minutes. 1.0 mL of water and 1.5 mL of hexane were added thereto, and the bottle was shaken. The bottle was left at rest, and then the upper layer was analyzed by gas-liquid chromatography (GLC).

### <GLC Analysis Conditions>

### (Conditions)

Apparatus: Agilent 7890B (manufactured by Agilent Technologies)
Column: DB-1ht 10 m×0.25 mm×0.2 µm (manufactured by Agilent J&W)
Carrier gas: 1.0 mL He/min
Injector: Split (1:50), T=340°C
Detector: FID, T=350°C
Oven temperature: The temperature was increased at 10°C/min from 80°C to 340°C, and kept for 15 minutes.

### (ii) Composition of Constituent Fatty Acids of Fat or oil

Fatty acid methyl esters were prepared in accordance with "Preparation method for fatty acid methyl ester (2.4.1.-1996)" described in "Standard Method for the Analysis of Fats, Oils and Related Materials" edited by Japan Oil Chemists' Society, and the resultant fat or oil samples were subjected to measurement in conformity with American Oil Chemists. Society Official Method Ce 1f-96 (GLC method).

### <GLC Analysis Conditions>

Apparatus: Agilent 7890B (manufactured by Agilent Technologies)
Column: CP-SIL88 50 m×0.25 mm×0.2 µm (manufactured by Agilent J&W)
Carrier gas: 1.0 mL He/min
Injector: Split (1:50), T=300°C
Detector: FID, T=300°C
Oven temperature: kept at 150°C for 5 min→increased at 1°C/min→kept at 160°C for 5 min→increased at 2°C/min→kept at 200°C for 10 min→increased at 10°C/min→kept at 220°C for 5 min

### (iii) Analysis of Hexanal and Propionic Acid

The analysis of hexanal and propionic acid was performed by a headspace solid phase microextraction/gas chromatography/mass spectrometry (HS SPME/GC/MS) method. 50/30 µm, DVB/CAR/PDMS fiber (manufactured by Supelco, Inc.) was used as a SPME fiber, and MPS-2 (manufactured by Gerstel Inc.) was used as an autosampler.

1 g of a fat or oil sample was taken into a vial for a headspace (10 mL volume; manufactured by GL Sciences Inc.), and warmed at 40°C for 20 minutes. After that, a headspace phase was sampled with the SPME fiber for 30 minutes. Measurement was performed by GC/MS.

### <GC/MS Analysis Conditions>

Apparatus: Agilent 7890A/5975 (manufactured by Agilent Technologies)
Column: VF-WAX 60 m×0.25 mm×1.0 µm (manufactured by Agilent J&W)
Carrier gas: 1.0 mL He/min
Injector: Splitless, T=240°C
Oven temperature: kept at 35°C for 4 min→increased at 3°C/min→185°C→increased at 10°C/min→kept at 240°C for 10 min
Ionization method: EI (70 eV)
Ion source temperature: 230°C
Measurement mode: precursor ion scan range: m/z 30 to 500

Examples 1 to 8 and Comparative Examples 1 to 7 (1) Preparation of Fat or oil "a" to Fat or oil "d"

A fat or oil "a" to a fat or oil "d" shown in Table 1 were prepared.

**Table 1**

| | | Fat or oil "a" | Fat or oil "b" | Fat or oil "c" | Fat or oil "d" |
|---|---|---|---|---|---|
| Glyceride composition | Free fatty acids | 0.3 | 0.3 | 0.1 | 0.0 |
| | MAG | 0.4 | 1.0 | 0.0 | 0.0 |
| | DAG | 84.4 | 82.5 | 2.9 | 1.7 |
| | TAG | 14.8 | 16.2 | 97.1 | 98.3 |
| Fatty acid composition of whole fat or oil (%) | Palmitic acid | 3.0 | 2.7 | 5.3 | 3.9 |
| | Stearic acid | 1.0 | 1.6 | 4.2 | 1.7 |
| | Oleic acid | 35.3 | 22.6 | 17.5 | 58.0 |
| | Linoleic acid | 48.3 | 15.9 | 15.6 | 19.1 |
| | α-Linolenic acid | 8.1 | 53.2 | 54.9 | 8.8 |
| | Others | 4.3 | 4.0 | 2.5 | 8.5 |

| | | | | | |
|---|---|---|---|---|---|
| MAG: Monoacylglycerols DAG: Diacylglycerols TAG: Triacylglycerols | | | | | |

Fat or oil "a": Soybean oil and rapeseed oil were mixed and hydrolyzed with an enzyme to provide fatty acids, followed by gradual cooling, and precipitated fatty acids were fractionated by centrifugation. Then, the fractionated fatty acids and glycerin were subjected to an esterification reaction under reduced pressure through use of an immobilized 1,3-selective lipase as a catalyst. The immobilized enzyme was separated by filtration, and then the product after the completion of the reaction was subjected to molecular distillation, followed by water washing and deodorization, and 0.2 mass% of a tocopherol preparation (manufactured by Riken Vitamin Co., Ltd.) was added. Thus, a fat or oil "a" was obtained.

Fat or oil "b": A fat or oil "b" was obtained in the same manner as in the fat or oil "a" except that linseed oil was used instead of soybean oil and rapeseed oil.

Fat or oil "c": Linseed oil (Nisshin Flaxseed Oil; manufactured by The Nisshin OilliO Group, Ltd.) was used.

Fat or oil "d": Rapeseed oil (SEVEN PREMIUM Canola Oil; manufactured by J-oil Mills, Inc.) was used.

### (2) Preparation of Fat or oil A to Fat or oil K

The fat or oil "a" to the fat or oil "d" were mixed at a ratio shown in Table 2 to prepare a fat or oil A to a fat or oil K. The mixing ratios, glyceride compositions, and fatty acid compositions of the fat or oil A to the fat or oil K are shown in Table 2.

**Table 2**

| | | Fat or oil A | Fat or oil B | Fat or oil C | Fat or oil D | Fat or oil E | Fat or oil F | Fat or oil G | Fat or oil H | Fat or oil I | Fat or oil J | Fat or oil K |
|---|---|---|---|---|---|---|---|---|---|---|---|---|
| Mixing ratio of fat or oil (g/100 g) | Fat or oil "a" | | | 25 | 45 | | | | | | | |
| | Fat or oil "b" | 30 | 50 | 75 | 55 | 100 | 30 | | 35 | | 10 | 20 |
| | Fat or oil "c" | | 50 | | | | 70 | 100 | | 50 | | |
| | Fat or oil "d" | 70 | | | | | | | 65 | 50 | 90 | 80 |
| Glyceride composition (%) | Free fatty acids | 0.1 | 0.2 | 0.3 | 0.3 | 0.3 | 0.1 | 0.1 | 0.1 | 0.1 | 0.1 | 0.1 |
| | MAG | 0.3 | 0.4 | 0.8 | 0.7 | 0.9 | 0.2 | 0.0 | 0.2 | 0.0 | 0.1 | 0.1 |
| | DAG | 22.7 | 40.2 | 83.1 | 83.5 | 83.2 | 24.9 | 2.9 | 26.7 | 2.1 | 8.2 | 15.7 |
| | TAG | 76.9 | 59.2 | 15.8 | 15.5 | 15.6 | 74.8 | 97.1 | 72.9 | 97.9 | 91.6 | 84.1 |
| Fatty acid composition in fat or oil (%) | Palmitic acid | 3.6 | 4.0 | 2.7 | 2.7 | 2.7 | 4.7 | 5.3 | 3.4 | 4.6 | 3.8 | 3.6 |
| | Stearic acid | 1.8 | 3.0 | 1.5 | 1.3 | 1.6 | 3.8 | 4.2 | 1.7 | 3.0 | 1.7 | 1.7 |
| | Oleic acid | 49.3 | 20.0 | 25.8 | 28.4 | 22.5 | 20.0 | 17.5 | 45.9 | 37.6 | 54.5 | 51.1 |
| | Linoleic acid | 18.0 | 15.7 | 24.0 | 30.6 | 15.7 | 15.7 | 15.6 | 18.1 | 17.4 | 19.0 | 18.6 |
| | α-Linolenic acid | 20.1 | 54.0 | 42.0 | 32.8 | 53.5 | 52.3 | 54.9 | 23.7 | 31.8 | 12.9 | 17.1 |
| | Others | 7.2 | 3.2 | 4.1 | 4.2 | 4.0 | 3.5 | 2.5 | 7.2 | 5.6 | 8.2 | 7.8 |
| Fatty acid composition in DAG (%) | Palmitic acid | 2.5 | 2.6 | 2.5 | 2.5 | 2.4 | 2.8 | 6.0 | 2.5 | 5.3 | 2.6 | 2.5 |
| | Stearic acid | 1.4 | 1.4 | 1.2 | 1.1 | 1.3 | 1.6 | 3.7 | 1.3 | 3.0 | 1.4 | 1.3 |
| | Oleic acid | 23.5 | 22.0 | 25.3 | 27.9 | 21.9 | 22.5 | 25.4 | 22.8 | 33.2 | 26.4 | 23.8 |
| | Linoleic acid | 16.2 | 16.2 | 24.2 | 31.0 | 15.8 | 16.7 | 23.9 | 16.1 | 24.1 | 17.0 | 16.3 |
| | α-Linolenic acid | 53.3 | 54.3 | 43.0 | 33.3 | 55.0 | 53.6 | 39.2 | 53.8 | 31.2 | 49.9 | 52.5 |
| | Others | 3.1 | 3.5 | 3.8 | 4.2 | 3.6 | 2.8 | 1.9 | 3.5 | 3.1 | 2.7 | 3.5 |

| | | | | | | | | | | | | |
|---|---|---|---|---|---|---|---|---|---|---|---|---|
| MAG: Monoacylglycerols DAG: Diacylglycerols TAG: Triacylglycerols | | | | | | | | | | | | |

### (3) Preparation of Fat or oil Composition

The fat or oil A to the fat or oil K were each mixed with vitamin C palmitate (L-ascorbic acid palmitic acid ester, manufactured by DSM) or vitamin C stearate (VCS): 6-O-Stearoyl-L-ascorbic Acid (manufactured by Tokyo Chemical Industry, Co., Ltd.) at a ratio shown in Table 3 to provide a fat or oil composition. In Table 3, the content of diacylglycerols refers to a content in the fat or oil, the content of α-linolenic acid refers to a content in the constituent fatty acids of the fat or oil, and the content of vitamin C fatty acid ester refers to a content in the fat or oil composition.

### (4) Precipitation Evaluation of Vitamin C Fatty Acid Ester at Low Temperature

The fat or oil compositions of Examples and Comparative Examples were stored at 5°C for 3 days, and the precipitation of the vitamin C fatty acid ester was observed. A case in which the precipitation occurred was judged as "present", and a case in which the precipitation did not occur was judged as "absent".

### (5) Light Exposure Storage Evaluation

Each of the fat or oil compositions in which the precipitation of the vitamin C fatty acid ester at low temperature was not observed in the above-mentioned section (4) was exposed to light having an illuminance of about 2,000 lx at 25°C for 7 days using an illuminated incubator (manufactured by Tokyo Rikakikai Co., Ltd., FLI-2010A), and then its odor was evaluated by component analysis and sensory evaluation. The sensory evaluation was performed by three expert panelists in accordance with the following evaluation criteria. A score was determined through discussion by the three expert panelists.

### (Evaluation Criteria)

4: Pungent odor and rancid odor are strongly sensed
3: Pungent odor and rancid odor are sensed and regarded as a problem
2: Pungent odor and rancid odor are slightly sensed but not regarded as a problem
1: Pungent odor and rancid odor are hardly sensed

### (6) Results

The results are shown in Table 3.

**Table 3**

| | | | | Example 1* | Example 2* | Example 3* | Example 4 | Example 5 | Example 6* | Example 7 | Example 8* | Comparati ve Example 1 | Comparati ve Example 2 | Comparati ve Example 3 | Comparati ve Example 4 | Comparati ve Example 5 | Comparati ve Example 6 | Comparati ve Example 7 |
|---|---|---|---|---|---|---|---|---|---|---|---|---|---|---|---|---|---|---|
| Fat or oil used in blending | | | | Fat or oil A | Fat or oil B | Fat or oil C | Fat or oil D | Fat or oil E | Fat or oil E | Fat or oil F | Fat or oil E | Fat or oil G | Fat or oil H | Fat or oil B | Fat or oil B | Fat or oil I | Fat or oil J | Fat or oil K |
| Fat or oil composi tion | Fat or oil | (A) | DAG in fat or oil (%) | 22.7 | 40.2 | 83.1 | 83.5 | 83.2 | 83.2 | 24.9 | 83.2 | 2.9 | 26.7 | 40.2 | 40.2 | 2.1 | 8.2 | 15.7 |
| | | (B) | Ratio of ALA in fatty acid composition in fat or oil (%) | 20.1 | 54.0 | 42.0 | 32.8 | 53.5 | 53.5 | 52.3 | 53.5 | 54.9 | 23.7 | 54.0 | 54.0 | 31.8 | 12.9 | 17.1 |
| | (C) | | VCP (%) | 0.027 | 0.050 | 0.075 | 0.055 | 0.100 | 0.240 | 0.100 | 0.000 | 0.000 | 0.015 | 0.027 | 0.500 | 0.050 | 0.100 | 0.200 |
| | | | VCS (%) | 0.000 | 0.000 | 0.000 | 0.000 | 0.000 | 0.000 | 0.000 | 0.050 | 0.000 | 0.000 | 0.000 | 0.000 | 0.000 | 0.000 | 0.000 |
| | (D) | | (DAG)/(VC) | 841.5 | 803.1 | 1,108.6 | 1,518.3 | 832.2 | 346.7 | 248.7 | 1,664.4 | - | 1,780.8 | 1,487.3 | 80.3 | 41.2 | 82.4 | 78.3 |
| | (E) | | (ALA)/(VC) | 743.7 | 1,080.4 | 560.4 | 596.2 | 534.8 | 222.8 | 523.4 | 1,069.7 | - | 1,581.5 | 2,000.7 | 108.0 | 636.2 | 128.6 | 85.7 |
| Precipitation of VC at low temperature | | | | Absent | Absent | Absent | Absent | Absent | Absent | Absent | Absent | Absent | Absent | Absent | Present | Present | Present | Present |
| Light exposur e storage evaluati on | Component analysis | | (G) Hexanal peak area | 2,450,13 4 | 2,576,52 5 | 4,912,71 4 | 7,954,94 8 | 6,103,92 7 | 12,260,4 33 | 5,485,05 1 | 2,729,15 9 | 773,187 | 2,433,387 | 1,816,042 | - | - | - | - |
| | | | (H)Propionic acid peak area | 1,447,65 1 | 1,518,95 0 | 1,140,88 5 | 1,732,75 0 | 2,034,87 5 | 3,554,80 5 | 2,294,69 0 | 1,435,88 7 | 3,300,821 | 2,675,973 | 2,041,622 | - | - | - | - |
| | | | (Hexanal)/(propio nic acid) | 1.69 | 1.70 | 4.31 | 4.59 | 3.00 | 3.45 | 2.39 | 1.90 | 0.23 | 0.91 | 0.89 | - | - | - | - |
| | Sensory evaluation | | Pungent odor and rancid odor | 2 | 2 | 1 | 1 | 1 | 2 | 1 | 2 | 4 | 3 | 3 | - | - | - | - |

| | | | | | | | | | | | | | | | | | | |
|---|---|---|---|---|---|---|---|---|---|---|---|---|---|---|---|---|---|---|
| *Reference Examples DAG: Diacylglycerols ALA: α-Linolenic acid VCP: Vitamin C palmitate VCS: Vitamin C stearate VC: Vitamin C fatty acid ester | | | | | | | | | | | | | | | | | | |

As shown in Table 3, in each of the fat or oil compositions of Examples 1 to 8 and Comparative Examples 1 to 3, the precipitation of the vitamin C fatty acid ester under a low temperature of 5°C was not observed. However, it was recognized that the fat or oil compositions of Examples 1 to 8 and the fat or oil compositions of Comparative Examples 1 to 3 were different from each other in generation amounts of hexanal and propionic acid after exposure to light. In each of the fat or oil compositions of Examples 1 to 8, hexanal was preferentially generated among hexanal and propionic acid, and in the sensory evaluation, grassy odor was sensed but pungent odor and rancid odor were suppressed. In contrast, in each of the fat or oil compositions of Comparative Examples 1 to 3, a larger amount of propionic acid was generated among hexanal and propionic acid, and in the sensory evaluation, pungent odor and rancid odor resulting therefrom were also sensed.

In each of the fat or oil compositions of Comparative Examples 4 to 7, the vitamin C fatty acid ester was precipitated under a low temperature of 5°C.

## Claims

1. A fat or oil composition, which satisfies the following (A) to (E):
(A) a content of diacylglycerols in a fat or oil is 15 mass% or more;
(B) a content of α-linolenic acid in constituent fatty acids of the fat or oil is 20 mass% or more;
(C) a content of a vitamin C fatty acid ester is from 0.025 mass% to 0.30 mass%;
(D) a mass ratio of the content of diacylglycerols in the fat or oil to the content of vitamin C fatty acid ester in the fat or oil composition, [(DAG)/(VC)], is 150 or more; and
(E) a mass ratio of the content of α-linolenic acid in the constituent fatty acids of the fat or oil to the content of vitamin C fatty acid ester in the fat or oil composition, [(ALA)/(VC)], is from 300 to 700.

2. The fat or oil composition according to claim 1, wherein the fat or oil composition comprises 90 mass% to 99.975 mass% of the fat or oil.

3. The fat or oil composition according to claim 1 or 2, wherein a content of α-linolenic acid in constituent fatty acids of the diacylglycerols is 20 mass% or more.

4. The fat or oil composition according to any one of claims 1 to 3, wherein a content of linoleic acid in the constituent fatty acids of the fat or oil is from 5 mass% to 40 mass%.

5. The fat or oil composition according to any one of claims 1 to 4, wherein a content of oleic acid in the constituent fatty acids of the fat or oil is from 10 mass% to 65 mass%.

## Patentansprüche

1. Fett- oder Ölzusammensetzung, die die folgenden Bedingungen (A) bis (E) erfüllt:
(A) der Gehalt an Diacylglycerolen in einem Fett oder Öl beträgt 15 Massenprozent oder mehr;
(B) der Gehalt an α-Linolensäure in den Fettsäuren, aus denen das Fett oder Öl besteht, beträgt 20 Massenprozent oder mehr;
(C) der Gehalt an Vitamin-C-Fettsäureester beträgt 0,025 bis 0,30 Massenprozent;
(D) das Massenverhältnis des Gehalts an Diacylglycerolen in dem Fett oder Öl zum Gehalt an Vitamin-C-Fettsäureester in der Fett- oder Ölzusammensetzung, [(DAG)/(VC)], beträgt 150 oder mehr; und
(E) das Massenverhältnis des Gehalts an α-Linolensäure in den Fettsäuren, aus denen das Fett oder Öl besteht, zum Gehalt an Vitamin-C-Fettsäureester in der Fett- oder Ölzusammensetzung, [(ALA)/(VC)], beträgt 300 bis 700.

2. Fett- oder Ölzusammensetzung gemäß Anspruch 1, wobei die Fett- oder Ölzusammensetzung 90 Massenprozent bis 99,975 Massenprozent des Fettes oder Öls umfasst.

3. Fett- oder Ölzusammensetzung gemäß Anspruch 1 oder 2, wobei der Gehalt an α-Linolensäure in den Fettsäuren, aus denen die Diacylglycerolen bestehen, 20 Massenprozent oder mehr beträgt.

4. Fett- oder Ölzusammensetzung gemäß mindestens einem der Ansprüche 1 bis 3, wobei der Gehalt an Linolsäure in den Fettsäuren, aus denen das Fett oder Öl besteht, 5 Massenprozent bis 40 Massenprozent beträgt.

5. Fett- oder Ölzusammensetzung gemäß mindestens einem der Ansprüche 1 bis 4, wobei der Gehalt an Ölsäure in den Fettsäuren, aus denen das Fett oder Öl besteht, 10 Massenprozent bis 65 Massenprozent beträgt.

## Revendications

1. Composition de matière grasse ou d'huile, qui satisfait les points (A) à (E) suivants :
(A) une teneur en diacylglycérols dans une matière grasse ou une huile est de 15 % en masse ou plus ;
(B) une teneur en acide α-linolénique dans des acides gras constitutifs de la matière grasse ou de l'huile est de 20 % en masse ou plus ;
(C) une teneur en ester d'acide gras de vitamine C va de 0,025 % en masse à 0,30 % en masse ;
(D) un rapport massique de la teneur en diacylglycérols dans la matière grasse ou l'huile sur la teneur en ester d'acide gras de vitamine C dans la composition de matière grasse ou d'huile, [(DAG)/(VC)], est de 150 ou plus ; et
(E) un rapport massique de la teneur en acide α-linolénique dans les acides gras constitutifs de la matière grasse ou de l'huile sur la teneur en ester d'acide gras de vitamine C dans la composition de matière grasse ou d'huile, [(ALA)/(VC)], va de 300 à 700.

2. Composition de matière grasse ou d'huile selon la revendication 1, dans laquelle la composition de matière grasse ou d'huile comprend de 90 % en masse à 99,975 % en masse de la matière grasse ou de l'huile.

3. Composition de matière grasse ou d'huile selon la revendication 1 ou la revendication 2, dans laquelle une teneur en acide α-linolénique dans des acides gras constitutifs des diacylglycérols est de 20 % en masse ou plus.

4. Composition de matière grasse ou d'huile selon l'une quelconque des revendications 1 à 3, dans laquelle une teneur en acide linoléique dans les acides gras constitutifs de la matière grasse ou de l'huile va de 5 % en masse à 40 % en masse.

5. Composition de matière grasse ou d'huile selon l'une quelconque des revendications 1 à 4, dans laquelle une teneur en acide oléique dans les acides gras constitutifs de la matière grasse ou de l'huile va de 10 % en masse à 65 % en masse.
